# EUROPEAN PATENT APPLICATION

(11) **EP 3 736 497 A1**
(43) Date of publication of application: **11.11.2020**
(21) Application number: 19172685.0
(22) Date of filing: 06.05.2019
(51) Int. Cl.: F24C 7/08

(54) **COOKING APPLIANCE**

(71) Applicant: ELECTROLUX APPLIANCES AKTIEBOLAG, 105 45 Stockholm (SE)
(72) Inventor: KLING, Jennifer, 91541 Rothenburg ob der Tauber (DE); MOHR, Christian, 90327 Nürnberg (DE); PUCHINGER, Bianca, 91541 Rothenburg ob der Tauber (DE)
(74) Representative: Electrolux Group Patents

(57) **Abstract**

The invention relates to a cooking appliance comprising one or more zones (2) for preparing food and a control unit (3) for controlling the cooking appliance (1), wherein the control unit (3) is operatively coupled with a voice communication and recognition device (4), said voice communication and recognition device (4) providing a communication interface to a user of the cooking appliance (1), wherein the cooking appliance (1) comprises a storage (5) for storing cooking settings which are established based on information gathered in previous cooking procedures and wherein the cooking appliance (1) is configured to provide an assisted or automatic cooking process based on said cooking settings stored in said storage (5).

## Description

The present invention relates generally to the field of cooking appliances. More specifically, the present invention relates to a cooking appliance with a user interface built by a voice communication and recognition device which can be actively trained by the users to provide an assisted or automatic cooking process.

### BACKGROUND OF THE INVENTION

Today, cooking appliances are mainly controlled by manual user input. The user has to choose several cooking settings like cooking zone, power level, cooking time.

Disadvantageously, user friendliness of manually controlled cooking appliances is very low.

### SUMMARY OF THE INVENTION

It is an objective of the embodiments of the invention to provide a cooking appliance with improved user friendliness. The objective is solved by the features of the independent claims. Preferred embodiments are given in the dependent claims. If not explicitly indicated otherwise, embodiments of the invention can be freely combined with each other.

According to an aspect, the invention refers to a cooking appliance comprising one or more zones for preparing food and a control unit for controlling the cooking appliance. The control unit is operatively coupled with a voice communication and recognition device. Said voice communication and recognition device provides a communication interface to a user of the cooking appliance. The cooking appliance further comprises a storage for storing cooking settings which are established based on information gathered in previous cooking procedures and wherein the cooking appliance is configured to provide an assisted or automatic cooking process based on said cooking settings stored in said storage.

Said cooking appliance is advantageous because the appliance is a self-learning device preferably comprising artificial intelligence learning capabilities. Thereby, the cooking appliance can adapt to certain user customs or other circumstances influencing the cooking result and thereby providing a user-tailored assisted or automatic cooking process.

According to an embodiment, the cooking appliance is configured to actively ask for user input, preferably via said voice communication and recognition device and to adapt cooking settings stored in said storage based on said user input. For example, when using the cooking appliance for the first time, the cooking appliance may start a communication with the user to ask for certain cooking information and cooking settings. The gathered information may be stored in the storage and may be used in subsequent cooking procedures for an assisted or automatic cooking process. Thereby the usage of the cooking appliance is significantly simplified.

According to an embodiment, the cooking appliance is configured to provide user profiles for different users and to select a certain user profile based on user information provided by the voice communication and recognition device. The voice communication and recognition device may comprise user recognition capabilities, e.g. may be configured to recognize a certain user based on voice characteristics. The voice communication and recognition device may provide information regarding the recognized user to the cooking appliance. Based on said information, the cooking appliance is configured to select a certain user profile and provide an assisted or automatic cooking process which is tailored to the specific user.

According to an embodiment, the control unit is configured to select, suggest and/or prohibit certain cooking functions or cooking settings based on the selected user profile. For example, the children in a household may have only limited access to the cooking functions of the cooking appliance whereas the parents have full access. In addition, each user may cook his preferred recipes with certain pieces of cookware. The control unit may be configured to initiate storage of cookware-recipe correlations, specifically cookware-recipe correlations which are further associated with a user profile. Based on the user profiles it is possible to provide a user-tailored assisted or automatic cooking process.

According to an embodiment, cooking settings stored in the storage are associated with a certain user profile. Thereby it is possible to provide an assisted or automatic cooking process which is adapted to the specific user behavior because user-specific cooking settings can be selected based on the active user profile.

According to an embodiment, information regarding cookware, recipe parameters, type and/or source of ingredients is stored in association with a certain user profile. Said information may be gathered based on a user interaction via the voice communication and recognition device. Thereby certain cooking settings can be selected based on the used piece of cookware and/or based on the recipe or ingredients used for cooking a meal.

According to an embodiment, the control unit is configured to receive recipe specification information from the voice communication and recognition device and provides and/or suggests cooking settings or cooking information, specifically user-specific cooking settings or cooking information, based on said recipe specification information. Said recipe specification information may be, for example, one or more signal words, e.g. "pasta", "spaghetti al dente" or "pizza". A set of cooking settings and/or further cooking information may be stored in association with certain recipe specification information. In case that recipe specification information is received by the voice communication and recognition device (e.g. "spaghetti al dente"), the control unit may perform a cooking procedure based on cooking settings and/or cooking information which are associated with said recipe specification information.

According to an embodiment, the control unit is configured to update information stored in said storage based on information gathered during a cooking procedure. For example, if the user may change the power level during a cooking procedure to a lower level (e.g. when cooking pasta), the control unit may store information regarding said power level change and may automatically perform said power level change at a certain point of time after starting the cooking process in a subsequent cooking procedure (specifically when cooking pasta again). Thereby the automatic control of the cooking appliance can be refined over time.

According to an embodiment, the cooking appliance is configured to interact with the user via the voice communication and recognition device in order to gather information regarding the recipe, degree of cooking, amount of food to be cooked and/or number of persons participating in the meal. Said interaction may be performed according to a question-answer scheme. Thereby the cooking appliance receives further information which may have influence on the cooking settings used for controlling an assisted or automatic cooking process (e.g. chosen power level, cooking time etc.).

According to an embodiment, after receiving information from a user, the control unit is configured to provide information to the user via the voice communication and recognition device regarding a preferred zone, cooking time, amount of food, ingredients and/or amount of ingredients. So, the cooking appliance can preferably interact with the user in order to instruct the user regarding certain procedures or actions to be performed during the cooking process.

According to an embodiment, the cooking appliance comprises a measurement entity configured to measure electrical values of the cooking appliance, establish cookware-specific information based on said measured electrical values and store said cookware-specific information in the storage. For example, the measurement entity may comprise one or more sensors or a measurement circuit, based on which cookware-specific information specifying certain cookware characteristics can be determined. For example, based on a power measurement circuit and a temperature sensor, information regarding the heat-up characteristics of a cookware can be determined. Said cookware-specific information can be used to choose cooking settings which match to the used cookware. In addition, based on said cookware-specific information it can be determined which piece of cookware out of a set of multiple pieces of cookware is currently used in a cooking procedure.

According to an embodiment, the control unit is configured to determine cookware-specific information before starting the cooking process or at the beginning of the cooking process and choose cookware-specific cooking settings based on said determined cookware-specific information. Thereby the assisted or automatic cooking process can be tailored to the currently used piece of cookware.

According to an embodiment, the control unit is configured to store recipe information in the storage and assign recipe-specific cooking settings to said recipe information. Thereby the cooking appliance provides a recipe-specific assisted or automatic cooking process.

According to an embodiment, the control unit is operatively coupled with one or more sensors, said sensors being configured to provide temperature information during the cooking process. The sensor may be a sensor included in the cooking application or may be an external sensor, e.g. a food probe inserted in the food to be cooked. Based on said sensor it is possible to control the cooking process to achieve a desired target temperature of food.

According to a further aspect, the invention relates to a method for controlling a cooking process of a cooking appliance, the cooking appliance comprising a control unit, a voice communication and recognition device operatively coupled with the control unit and a storage. The method comprises the steps of:
- receiving user input via the voice communication and recognition device at the control unit;
- establishing and storing cooking settings in the storage;
- providing an assisted or automatic cooking process based on said cooking settings stored in said storage and said received user input.

The term "cooking appliance" as used in the invention may refer to any cooking appliances, for example, hobs, induction hobs, baking ovens, microwaves, steam ovens etc.

The term "information gathered in previous cooking procedures" as used in the invention may refer to any information for which the appliance may actively ask for or which can be derived during the cooking procedure itself, e.g. by a sensor or based on operating parameters like electric power, electric current etc.

The term "zones for preparing food" as used in the invention may refer to any place which can be used for cooking or heating food, specifically to an oven cavity, a heating zone of a hob or a cavity of a microwave or steam oven.

The term "cooking settings" as used in the invention may refer to any settings to be chosen at the cooking appliance, specifically, cooking time, cooking level, selected cooking zone etc.

The term "cooking information" as used in the invention may refer to any information associated with the cooking process for cooking a certain meal or recipe, specifically, preferred cookware, ingredients, amount of ingredients etc.

The term "voice communication and recognition device" as used in the invention may refer to a device adapted to communicate with a user orally, i.e. which is adapted to provide acoustic information, preferably words or sentences, to the user and receive spoken information form said user in order to initiate actions based on said received spoken information.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawing, in which an example schematic illustration of a cooking appliance is shown.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

The figure shows a schematic illustration of a cooking appliance 1, in the present case a hob, specifically an induction hob. However, a person skilled in the art may recognize that the present invention can be also included in other household appliances, e.g. baking ovens, steam ovens, microwaves etc.

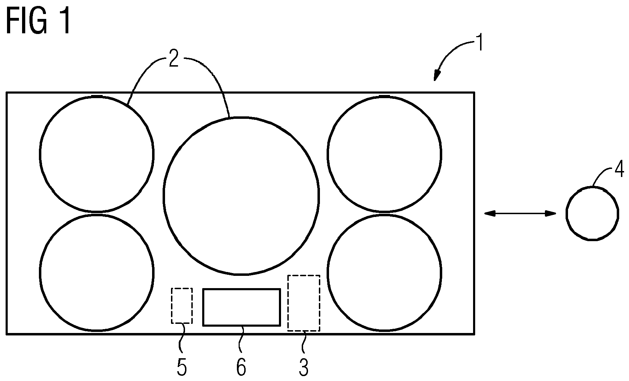

The cooking appliance 1 comprises a plurality of zones 2, specifically cooking zones for preparing food. The cooking appliance 1 is operatively coupled with a voice communication and recognition device 4. As shown in fig. 1, the voice communication and recognition device 4 may be an external device. However, according to other embodiments, the voice communication and recognition device 4 may form an integral part of the cooking appliance 1.

The cooking appliance 1 further comprises a control unit 3. The control unit 3 is operatively coupled with the voice communication and recognition device 4 in order to interact with a user of the cooking appliance 1. More in detail, the cooking appliance 1 may receive via the control unit 3 and the voice communication and recognition device 4 user input, respectively may provide information to the user via said voice communication and recognition device 4.

Furthermore, the cooking appliance 1 includes a storage 5, said storage 5 being configured to store information, specifically cooking settings. Said cooking settings may be established based on information gathered in previous cooking procedures. Based on said stored cooking settings, the cooking appliance 1 is able to provide an assisted or automatic cooking process.

In addition, the cooking appliance 1 may comprise a graphical user interface 6.

The cooking appliance 1 including the control unit 3 and the storage 5 may be an artificial intelligence storage and self-learning device which may actively ask for user input, specifically via the voice communication and recognition device 4 and/or via graphical user interface 6. Based on said user input, the cooking appliance 1 is trained and automatically adapts to the needs and customs of a user in order to carry out an assisted or even automatic cooking process based on said training.

In the following the functionality of the cooking appliance 1 as an artificial intelligence storage and self-learning device is explained in closer detail.

As explained before, the user interaction is performed via the voice communication and recognition device 4. Said voice communication and recognition device 4 may comprise user recognition capabilities. The voice communication and recognition device 4 may provide information regarding the recognized user to the control unit 3 of the cooking appliance 1. The cooking appliance 1 may be adapted to establish one or more user profiles and store information associated with said user profiles. Based on the information regarding the recognized user, the control unit 3 is able to select a certain user profile associated with said user and provide an assisted or automatic cooking process according to the information correlated with said user profile.

For example, the cooking appliance 1 may comprise the user profiles "wife", "husband" and "child". Depending on the voice recognised by the voice communication and recognition device 4, the cooking appliance 1 may select a user profile associated with cooking settings which are adapted to the cooking habits of the recognised user. Thereby, the cooking appliance 1 may provide a user-specific guidance for cooking, e.g. user-specific cooking functions, recipes, etc.

Additionally, the information associated with the user profile may be indicative for cooking functions or cooking settings which are prohibited for a specific user, for example, to enable a child to cook only pre-selected recipes, use only pre-selected appliance functions, particularly cooking functions or even prohibit use of the appliance at all. Such appliance functions or cooking functions may be, for example the activation or deactivation of certain cooking zones, selection of power levels, etc.

In addition, the cooking appliance 1 may provide further appliance functions as additional functions, which may not directly be linked to the cooking process, e.g. radio, chat, SMS, video etc. Said additional function may also be controlled via the voice communication and recognition device 4.

The control unit 3 may be configured to recognize recipe specification information within the user input provided via the voice communication and recognition device 4. Said recipe specification information may comprise, for example, a signal word like "pizza", "pasta", "fish" etc.

The control unit 3 may assign a certain recipe to a signal word, e.g. a certain pasta recipe to the signal word "pasta". The storage 5 may store cooking settings in association with a certain recipe. Said recipe-specific cooking settings may also be associated with a certain user, i.e. the storage 5 may store, for example, different pasta-recipes for different users and assign a certain set of cooking settings to said pasta-recipes. Thereby, the cooking appliance is adapted to provide a user-tailored assisted or automatic cooking procedure based on the information included in the storage 5.

After determining the user providing the user input to the cooking appliance 1 and assigning a certain user profile to the recognized user, the control unit 3 may provide and/or suggest cooking settings, e.g. cooking time, power level, cooking zone etc. dependent on the user-specific recipe. In addition, further user-specific cooking information may be provided and/or suggested, for example, information about preferred cookware, ingredients, amount of ingredients etc.

For example, a certain user is used to cook pasta from a specific supplier, with a specific pot, using a lid. Said user-specific information is stored in the user profile of said user. After receiving the signal word "Pasta" from said user, the cooking appliance 1 suggests to the user to add a certain amount of water, to use a certain cooking zone and pre-selects a specific power level (adjusted to pot parameters, e.g. size and material, amount of water) and a pre-selected timer. Thereby, the relevant cooking settings and parameters will be selected such that an optimal cooking result leading to pasta "al dente" is reached with the specific pot and used kind of pasta.

The cooking appliance 1 may be adapted to interact with the user via the voice communication and recognition device 4 according to a question-response scheme for completing information required for determining a suitable cooking procedure and adjust the cooking settings. For example, the control unit 3 may send information to the voice communication and recognition device 4 in order to ask the user about the desired degree of cooking, e.g. "al dente" or "soft". Based on subsequent user input which may also be provided via the voice communication and recognition device 4, the pre-selected cooking settings, particularly time, may be automatically adjusted and suggested to the user dependent on the user input.

In addition, the user interaction according to said question-response scheme may include a request regarding the amount of food to be cooked and/or the number of meal participants. As an answer to said request, the control unit 3 may receive a user input via said voice communication and recognition device 4. Based on said user input, the control unit 3 may initiate an audio output at the voice communication and recognition device 4, said audio output comprising information about the suggested zone 2, cooking time, amount of water and/or foodstuff, and/or may preselect or adjust certain cooking settings, like the power level and/or timer.

Cooking settings like cooking time or cooking levels and/or a preselection of a preferred cooking zone can be suggested to the user via an output signal (e.g. speech output), particularly via the voice communication and recognition device 4 and/or pre-selected by the control unit 3. For example, upon user input like "pasta for four persons", the control unit 3 may provide a audio output comprising information about the suggested cooking zone, cooking time, amount of water and/or foodstuff, and/or may preselect certain cooking settings like the power level and/or timer.

The cooking appliance 1 may comprise a measurement entity which is configured to measure cookware-specific parameters. More in detail, the measurement entity may comprise one or more sensors or a measurement circuit included in a power unit of the cooking appliance 1 configured to measure electrical values in order to determine cookware-specific information. Said cookware-specific information may be stored in the storage 3. The inventor recognized that a typical household or user usually has only a limited number of cookware, e.g. one or two frying pans, respectively, several pots. Each piece of cookware shows certain cookware-specific properties, e.g.. After capturing and storing cookware-specific information about said cookware-specific properties in a previous cooking procedure, the control unit 3 is able to determine which kind of cookware is used in a later cooking procedure and use a certain set of cooking settings which is advantageous for said specific cookware. So, depending on the cookware specific information, the control unit may assign favorable and/or preselected cooking settings, e.g. power level, to the specific cookware.

For example, a certain user may cook pasta always in a specific large-sized pot, however, may have a suboptimal behavior regarding power transfer. The control unit 3 may thus assign a pot-specific power level, specifically a higher power level to the pot. On the other hand, a pan which is typically used for meat frying may be more efficient regarding power transfer. Thus, the control unit 3 may assign a different power level to the pan, specifically a lower power level. Upon user selection of a dedicated recipe, the control unit 3 may also store and preferably communicate information about the respective cookware. Thus the control unit 3 may particularly be able to assign specific and particularly cookware-specific cooking settings which are dependent on the (re-)recognized and preferably stored cookware-specific information.

Preferably, the cooking appliance 1 may be adapted to be trained regarding cooking certain recipes. More in detail, the control unit 3 may be configured to initiate the storage of cooking settings or cooking information in association with recipe information. Thereby it is possible to use a certain set of cooking settings or cooking information for a certain recipe.

The inventor recognized that a certain user may cook only a limited number of recipes or may cook certain recipes more often than others. The control unit 3 may communicate with the user about said recipes. Said communication may be performed according to a question-answer scheme. Particularly, the user may be able to train the control unit 3 to cook certain recipes which he intends to cook more frequently. Thereby the control unit 3 is capable to initiate a storing of recipe-specific cooking settings, e.g. timer, cooking level and may assign the recipe-specific cooking settings to recipe information characterizing a specific recipe. Preferably, said recipe-specific cooking settings and recipe information may be also linked to recipe specification information, for example to a certain signal word, like "pasta", "pizza" etc. Thereby the user is able to initiate an assisted or automatic cooking process of a certain recipe in a user-friendly manner via the voice communication and recognition device 4.

The storage 5 may be adapted to store certain ingredient information in association with said recipe information. More specifically, the cooking appliance 1 may be adapted to be trained regarding cooking procedures which use certain ingredients.

The inventor recognized that a certain user typically uses only a limited number of specific ingredients, or may use certain specific ingredients more often than others (e.g. pasta from a certain supplier). The control unit 3 may communicate with the user about said specific ingredient. Particularly, the user may train the control unit 3 to specific ingredients, e.g. pasta from supplier A has to be cooked 10 -12 minutes whereas pasta from supplier B has to be cooked 8 - 10 min. Thereby the control unit 3 is capable to store ingredient-specific information, e.g. optimal cooking time, optimal power level, optimal amount of water for the requested amount and type of foodstuff.

Alternatively or in addition, the user habits, like the cookware, recipe selection, etc. can also be based on a database or survey.

According to an embodiment, the cooking appliance 1 may comprise a temperature sensor or may be adapted to be coupled with a temperature sensor. Said temperature sensor may be included in the cooking appliance 1 or may be adapted to be coupled with the cooking appliance 1, for example via a wireless communication link (e.g. in case of a meat probe to be inserted in the food to be cooked). Thereby it is possible to determine the temperature of the food and control the cooking process in order to reach a desired target temperature.

It should be noted that the description and drawings merely illustrate the principles of the proposed invention. Those skilled in the art will be able to implement various arrangements that, although not explicitly described or shown herein, embody the principles of the invention.

### List of reference numerals

- 1: cooking appliance
- 2: zone
- 3: control unit
- 4: voice communication and recognition device
- 5: storage
- 6: graphical user interface

## Claims

1. Cooking appliance comprising one or more zones (2) for preparing food and a control unit (3) for controlling the cooking appliance (1), wherein the control unit (3) is operatively coupled with a voice communication and recognition device (4), said voice communication and recognition device (4) providing a communication interface to a user of the cooking appliance (1), wherein the cooking appliance (1) comprises a storage (5) for storing cooking settings which are established based on information gathered in previous cooking procedures and wherein the cooking appliance (1) is configured to provide an assisted or automatic cooking process based on said cooking settings stored in said storage (5).

2. Cooking appliance according to claim 1, configured to actively ask for user input, preferably via said voice communication and recognition device (4) and to adapt cooking settings stored in said storage (5) based on said user input.

3. Cooking appliance according to claim 1 or 2, configured to provide user profiles for different users and to select a certain user profile based on user information provided by the voice communication and recognition device (4).

4. Cooking appliance according to claim 3, wherein the control unit (3) is configured to select, suggest and/or prohibit certain cooking functions or cooking settings based on the selected user profile.

5. Cooking appliance according to claim 3 or 4, wherein cooking settings stored in the storage (3) are associated with a certain user profile.

6. Cooking appliance according to anyone of claims 3 to 5, wherein information regarding cookware, recipe parameters, type and/or source of ingredients is stored in association with a certain user profile.

7. Cooking appliance according to anyone of the preceding claims, wherein the control unit (3) is configured to receive recipe specification information from the voice communication and recognition device (4) and provides and/or suggests cooking settings or cooking information, specifically user-specific cooking settings or cooking information, based on said recipe specification information.

8. Cooking appliance according to anyone of the preceding claims, wherein the control unit (3) is configured to update information stored in said storage (5) based on information gathered during a cooking procedure.

9. Cooking appliance according to anyone of the preceding claims, configured to interact with the user via the voice communication and recognition device (4) in order to gather information regarding the recipe, degree of cooking, amount of food to be cooked and/or number of persons participating in the meal.

10. Cooking appliance according to claim 9, wherein, after receiving information from a user, the control unit (3) is configured to provide information to the user via the voice communication and recognition device (4) regarding a preferred zone (2), cooking time, amount of food, ingredients and/or amount of ingredients.

11. Cooking appliance according to anyone of the preceding claims, comprising a measurement entity configured to measure electrical values of the cooking appliance (1), establishing cookware-specific information based on said measured electrical values and storing said cookware-specific information in the storage.

12. Cooking appliance according to claim 11, wherein the control unit (3) is configured to determine cookware-specific information before starting the cooking process or at the beginning of the cooking process and choose cookware-specific cooking settings based on said determined cookware-specific information.

13. Cooking appliance according to anyone of the preceding claims, wherein the control unit (3) is configured to store recipe information in the storage and assign recipe-specific cooking settings to said recipe information.

14. Cooking appliance according to anyone of the preceding claims, wherein the control unit (3) is operatively coupled with one or more sensors, said sensors being configured to provide temperature information during the cooking process.

15. Method for controlling a cooking process of a cooking appliance (1), the cooking appliance (1) comprising a control unit (3), a voice communication and recognition device (4) operatively coupled with the control unit (3) and a storage (5), the method comprising the steps of:
- receiving user input via the voice communication and recognition device (4) at the control unit (3);
- establishing and storing cooking settings in the storage (5) ;
- providing an assisted or automatic cooking process based on said cooking settings stored in said storage (5) and said received user input.
